# EUROPÄISCHE PATENTSCHRIFT

(11) **EP 2 684 777 B1**
(45) Veröffentlichungstag und Bekanntmachung des Hinweises auf die Patenterteilung: **10.05.2017**
(21) Anmeldenummer: 13001186.9
(22) Anmeldetag: 09.03.2013
(51) Int. Cl.: B62D 21/07

(54) **Rahmentragstruktur mit mittragender Tankeinrichtung**
Chassis structure with integrated tank device
Structure de châssis avec dispositif de réservoir intégré

(30) Priorität: 13.07.2012 DE 102012013897
(43) Veröffentlichungstag der Anmeldung: 15.01.2014
(73) Patentinhaber: MAN Truck & Bus AG, 80995 München (DE)
(72) Erfinder: Sattler, Steve, 81375 München (DE); Hintereder, Jürgen, 80997 München (DE)
(74) Vertreter: v. Bezold & Partner Patentanwälte - PartG mbB

(56) Entgegenhaltungen:
- CN-A- 102 442 349
- DE-A1- 4 322 717
- FR-A- 1 352 633
- JP-A- H 092 323
- US-B1- 6 676 159

## Beschreibung

Die Erfindung betrifft eine Rahmentragstruktur für ein Nutzfahrzeug, insbesondere Lastkraftwagen, vorzugsweise Sattelzugmaschine.

Rahmentragstrukturen, insbesondere Fahrgestelle, für Sattelzugmaschinen sind in den unterschiedlichsten Ausführungsformen bekannt. Die Rahmentragstrukturen umfassen üblicherweise zwei Längsträger und mehrere Querträger. Ebenso sind Kraftstofftanks zur Aufnahme eines Kraftstoffs zum Betrieb eines Antriebsmotors für die Sattelzugmaschine in den unterschiedlichsten Ausführungsformen bekannt. Üblicherweise werden die Kraftstofftanks von seitlich außen an die Längsträger befestigt. Die Kraftstofftanks umfassen oft ein Fassungsvermögen von bis zu 600 Litern und nehmen deshalb einerseits relativ viel Raum ein und andererseits weisen sie in befülltem Zustand ein beachtliches Gewicht auf. Nachteilhaft an Rahmentragstrukturen mit an Längsträgern seitlich außen befestigten Kraftstofftanks ist z.B., dass im Falle einer dynamischen Anregung etwa durch eine Bodenwelle, die Rahmentragstrukturen erheblich belastet werden und zwar ungünstig, quasi exzentrisch. Außerdem ist die Montage üblicher Kraftstofftanks an die Längsträger aufwendig. Zum Stand der Technik können insbesondere die CN 102 442 349 A, die FR 1 352 633 A, die DE 43 22 717 A1, die US 6 676 159 B1 und die JP H 09 2323 A genannt werden.

Eine Aufgabe der Erfindung ist es, eine verbesserte und/oder alternative Rahmentragstruktur für ein Nutzfahrzeug zu schaffen.

Diese Aufgabe kann insbesondere mit den Merkmalen des Hauptanspruchs gelöst werden. Vorteilhafte Weiterbildungen sind den Unteransprüchen zu entnehmen.

Die Erfindung schafft eine Rahmentragstruktur für ein Nutzfahrzeug, insbesondere einen Lastkraftwagen, vorzugsweise eine Sattelzugmaschine. Die Rahmentragstruktur dient vorzugsweise mitunter zum Tragen eines Fahrerhauses. Die Rahmentragstruktur umfasst eine erste längsverlaufende Tragkonstruktion und eine zweite längsverlaufende Tragkonstruktion, die in Querrichtung der Rahmentragstruktur voneinander beabstandet sind. Die Rahmentragstruktur umfasst ferner zumindest eine Tankeinrichtung zur Fluidaufnahme, z.B. eine Kraftsfiofftankeinrichtung zur Aufnahme von Kraftstoff zum Betrieb einer Motoreinrichtung für das Nutzfahrzeug (z.B. ein Verbrennungsmotor, ein Dieselmotor oder ein Elektromotor) und/oder eine Lufttankeinrichtung zur Aufnahme von Luft.

Die Rahmentragstruktur zeichnet sich insbesondere dadurch aus, dass die Tankeinrichtung als mittragender Teil der Rahmentragstruktur ausgeführt ist und somit insbesondere zur Aufnahme und Weiterleitung von Trag- und/oder Fahrwerkslasten dient.

Die Tankeinrichtung kann z.B. als mittragender Teil der ersten Tragkonstruktion und der zweiten Tragkonstruktion wirken und somit insbesondere zur Aufnahme und Weiterleitung von Längskräften dienen.

Es ist möglich, dass die Tankeinrichtung als Queraussteifungskonstruktion oder zumindest Teil davon wirkt.

Es ist ebenso möglich, dass die Tankeinrichtung dazu dient, eine Antriebsstrangeinheit (z.B. eine Motoreinrichtung, einen Verbrennungsmotor, einen Dieselmotor, einen Elektromotor und/oder eine Getriebeeinrichtung) zu tragen.

Die Tankeinrichtung kann z.B. dazu dienen, Kräfte aus den Radaufhängungen für die Vorderräder des Nutzfahrzeugs aufzunehmen. Die Tankeinrichtung kann insbesondere mit den Radaufhängungen verbunden sein, z.B. mit deren Feder- und/oder Dämpferelementen und alternativ oder ergänzend mit deren Lenkerelementen (z.B. Quer-, Schräg- oder Längslenkerelemente).

Es ist möglich, dass die Tankeinrichtung dazu dient, im Wesentlichen vertikal wirkende Kräfte aus den Feder- und/oder Dämpferelementen der Radaufhängungen für die Vorderräder des Nutzfahrzeugs aufzunehmen und vorzugsweise als Dämpferträger für die Feder- und/oder Dämpferelemente zu wirken. Alternativ oder ergänzend kann die Tankeinrichtung dazu dienen, im Wesentlichen horizontal wirkende Kräfte der Lenkerelemente (z.B. Quer-, Schräg- oder Längslenkerelemente) der Radaufhängungen für die Vorderräder des Nutzfahrzeugs aufzunehmen.

Es ist möglich, dass die Tankeinrichtung und/oder die erste Tragkonstruktion und die zweite Tragkonstruktion oben auf oberen Enden der Feder- und/oder Dämpferelemente der Radaufhängungen für die Vorderräder des Nutzfahrzeugs angeordnet ist, was vorzugsweise eine günstige Krafteinleitung insbesondere ohne Kraftumlenkkonsole ermöglicht.

Es ist möglich, dass die Tankeinrichtung dazu dient, ein Fahrerhaus für das Nutzfahrzeug zu tragen (z.B. Fahrerhaussitze, Fahrerhausequippment, Fahrerhaus-Karosserie, Fahrerhaus-Gerippe, etc.). Alternativ oder ergänzend kann die Tankeinrichtung als Unterbau (z.B. Unterboden) für das Fahrerhaus dienen, der vorzugsweise zumindest geringfügig mittragender Teil der Rahmentragstruktur ist.

Es ist möglich, dass die Tankeinrichtung zweckmäßig in Längsrichtung baulich in die erste Tragkonstruktion und die zweite Tragkonstruktion integriert ist und somit vorzugsweise als erster Tanklängsträger und zweiter Tanklängsträger wirkt.

Es ist möglich, dass die Tankeinrichtung Durchlassaussparungen aufweist, die von der ersten Tragkonstruktion und der zweiten Tragkonstruktion durchlaufen werden.

Insbesondere verläuft die Tankeinrichtung von der ersten Tragkonstruktion zu der zweiten Tragkonstruktion, um die erste Tragkonstruktion und die zweite Tragkonstruktion zu verbinden.

Es ist möglich, dass die Tankeinrichtung die erste Tragkonstruktion und die zweite Tragkonstruktion zumindest abschnittsweise einfasst, zweckmäßig von unten und/oder von seitlich außen.

Die Tankeinrichtung kann z.B. von unten an die erste Tragkonstruktion und die zweite Tragkonstruktion angebracht werden.

Es ist möglich, dass die Tankeinrichtung zumindest abschnittsweise zwischen Vorderrädern für das Nutzfahrzeug verläuft und/oder über die Radmittelpunkte der Vorderräder z.B. in Längsrichtung nach vorne hinausragt.

Die Tankeinrichtung wird vorzugsweise aus einem oder mehreren im Wesentlichen hohlplattenförmigen Tankabschnitten ausgebildet. Ein hohlplattenförmiger Tankabschnitt kann z.B. im Wesentlichen horizontal ausgerichtet sein. Ein anderer hohlplattenförmiger Tankabschnitt kann z.B. im Wesentlichen vertikal ausgerichtet sein. Es ist möglich, dass der zumindest eine hohlplattenförmige Tankabschnitt die erste Tragkonstruktion mit der zweiten Tragkonstruktion verbindet und/oder baulich in die erste Tragkonstruktion und die zweite Tragkonstruktion integriert ist.

Die Tankeinrichtung kann z.B. ein im Wesentlichen hohlplattenförmiges Bodenteil und zwei im Wesentlichen hohlplattenförmige äußere Schenkelteile umfassen, die vorzugsweise eine im Wesentlichen U-förmige Gestalt bilden.

Es ist ebenso möglich, dass die Tankeinrichtung einen im Wesentlichen horizontalen Flanschteil und einen von dem Flanschteil erstreckenden Stegteil umfasst, die vorzugsweise eine im Wesentlichen L-, T- oder V-förmige Gestalt bilden.

Die Tankeinrichtung kann z.B. zumindest ein Schwallblech und/oder zumindest ein Verstärkungsmittel umfassen. Das Schwallblech und/oder das Verstärkungsmittel sorgt insbesondere dafür, dass die Tankeinrichtung als mittragender Teil der Rahmentragstruktur wirken kann. Das Verstärkungsmittel ist z.B. als zumindest eine Verstärkungsrippe, Verstärkungsverstrebung, Verstärkungsplatte und/oder gitterrahmenförmige Unterzugkonstruktion, etc. ausgebildet.

Die erste Tragkonstruktion und die zweite Tragkonstruktion umfassen zumindest einen aufgeweiteten Tragabschnitt, der zur Vergrößerung der Biegesteifigkeit dient. Die aufgeweiteten Tragabschnitte können sich nach unten, seitlich nach innen und/oder seitlich nach außen aufweiten.

Ähnlich kann die Tankeinrichtung zumindest einen aufgeweiteten Tankbereich umfassen, der zur Vergrößerung des Tankaufnahmevermögens und/oder zur Vergrößerung der Biegesteifigkeit dient. Der aufgeweitete Tankbereich kann sich z.B. nach unten, seitlich nach innen und/oder seitlich nach außen aufweiten.

Die Tankeinrichtung kann z.B. einen Aufnahmeraum schaffen, der dazu dient, eine Antriebsstrangeinheit (vorzugsweise eine Motoreinrichtung zum Antreiben des Nutzfahrzeugs (z.B. einen Verbrennungsmotor, einen Dieselmotor und/oder einen Elektromotor) und/oder eine Getriebeeinrichtung) für das Nutzfahrzeug aufzunehmen und vorzugsweise zumindest abschnittsweise einzufassen, z.B. von unten und/oder von seitlich außen.

Es ist möglich, dass die Tankeinrichtung in eine Oberzugkonstruktion und eine Unterzugkonstruktion aufgeteilt ist. Alternativ oder ergänzend kann die erste Tragkonstruktion und die zweite Tragkonstruktion in eine Oberzugkonstruktion und eine Unterzugkonstruktion aufgeteilt sein. Die Unterzugkonstruktion kann z.B. unter dem Niveau der Radmittelpunkte der Vorderräder für das Nutzfahrzeug verlaufen und die Oberzugkonstruktion darüber.

Die erste Tragkonstruktion und die zweite Tragkonstruktion sind zumindest abschnittsweise vorzugsweise aus Hohlprofilelementen ausgeführt, z.B. runden oder rechteckförmigen Hohlprofilelementen. Alternativ oder ergänzend können sie auch z.B. aus U-, I- oder L-Profilelementen ausgeführt werden.

Es ist möglich, dass die Tankeinrichtung insbesondere von unten durch Radaufhängungen (insbesondere deren Feder- und/oder Dämpferelemente) getragen wird. Alternativ oder ergänzend ist es möglich, dass die erste Tragkonstruktion und die zweite Tragkonstruktion insbesondere von unten durch Radaufhängungen (insbesondere deren Feder- und/oder Dämpferelemente) getragen werden.

Die Rahmentragstruktur kann eine dritte längsverlaufende Tragkonstruktion umfassen, die zwischen der ersten Tragkonstruktion und der zweiten Tragkonstruktion verläuft und zweckmäßig unter deren Niveau. Die dritte Tragkonstruktion kann zumindest abschnittsweise vorzugsweise aus Hohlprofilelementen ausgeführt sein, z.B. runden oder rechteckförmigen Hohlprofilelementen. Alternativ oder ergänzend kann sie auch z.B. aus U-, I- oder L-Profilelementen ausgeführt werden.

Die dritte Tragkonstruktion kann z.B. zur Abstützung und somit zumindest geringfügigen Entlastung der Tankeinrichtung dienen und z.B. darunter verlaufen. Ferner kann die dritte Tragkonstruktion insbesondere mit den Lenkerelementen der Radaufhängungen für die Vorderräder des Nutzfahrzeugs verbunden sein (z.B. Quer-, Schräg- oder Längslenkerelemente) und dazu dienen, deren insbesondere im Wesentlichen horizontal wirkenden Kräfte aufzunehmen.

Die Tankeinrichtung, die erste Tragkonstruktion und/oder die zweite Tragkonstruktion kann mit zumindest einer Lüftungsöffnung versehen sein, die insbesondere zur Kühlung einer Motoreinrichtung zum Antreiben des Nutzfahrzeugs (z.B. eines Verbrennungsmotors, eines Dieselmotors und/oder eines Elektromotors) dient. Die Lüftungsöffnung kann z.B. in Längsrichtung, in Querrichtung oder diagonal ausgerichtet sein.

Es ist möglich, dass die Tankeinrichtung z.B. innenseitig zumindest abschnittsweise mit Dichtmaterial, insbesondere Kunststoff, ausgekleidet ist. Zudem ist es möglich, dass ein Kunststofftank in die Tankeinrichtung eingebaut ist, der die Fluidaufnahme übernimmt. Mittragender Teil ist dann insbesondere der quasi außenliegende Teil der Tankeinrichtung, der vorzugsweise aus Blechmaterial hergestellt sein kann.

Die erste Tragkonstruktion und die zweite Tragkonstruktion können z.B. aus Tragprofilelementen (z.B. Hohlprofilelementen, U-Profilelementen, I-Profilelementen, etc.) ausgebildet werden. Es ist jedoch auch möglich, dass die erste Tragkonstruktion und die zweite Tragkonstruktion aus z.B. halbschalenförmigem Blech- oder Tiefziehmaterial (z.B. Blechumformelemente) gefertigt sind und z.B. mit Verstärkungsmitteln versehen sind, wie etwa Verstärkungsrippen, Verstärkungsplatten, Verstärkungsstreben, etc.. Ebenso kann die Tankeinrichtung aus z.B. halbschalenförmigem Blech- oder Tiefziehmaterial (z.B. Blechumformelemente) gefertigt sein und z.B. mit Verstärkungsmitteln versehen werden, wie etwa Verstärkungsrippen, Verstärkungsstreben, Verstärkungsplatten, etc..

Die Tankeinrichtung kann in einen ersten Tankabschnitt und einen zweiten Tankabschnitt aufgeteilt sein, die über eine Verbindungseinrichtung, insbesondere ein Verbindungsrohr oder einen hohlplattenförmigen Tankabschnitt, miteinander verbunden sind. Die Verbindungseinrichtung kann sich vorzugsweise im Wesentlichen in Querrichtung der Rahmentragstruktur erstrecken. Ferner kann aus der Verbindungseinrichtung die Ansaugung des Fluids (z.B. des Kraftstoffs oder der Luft) erfolgen.

Zu erwähnen ist nochmals, dass die zumindest eine Tankeinrichtung eine Kraftstofftankeinrichtung und/oder eine Lufttankeinrichtung umfasst.

Ferner ist zu erwähnen, dass die erste Tragkonstruktion und die zweite Tragkonstruktion insbesondere abschnittsweise aus quasi üblichen Tragprofilelementen (z.B. Rechteckhohlprofilelemente, Rundhohlprofilelemente, U-, I- und/oder L-Profilelemente) und abschnittsweise z.B. aus einer oder mehreren insbesondere hohlplattenförmigen mittragenden Tankeinrichtungen ausgebildet werden können. Es ist sogar möglich, dass die erste Tragkonstruktion und die zweite Tragkonstruktion abschnittsweise als Gitterrahmen ausgeführt werden.

Zu erwähnen ist ferner, dass das Merkmal "zwischen" vorzugsweise so zu verstehen ist, dass es insbesondere eine Positionierung in Querrichtung und/oder in Längsrichtung der Rahmentragstruktur definiert, während eine Positionierung in Vertikalrichtung der Rahmentragstruktur nicht eingeschränkt wird, es sei denn, eine Positionierung in Vertikalrichtung wird ausdrücklich spezifiziert.

Zu erwähnen ist auch, dass das Merkmal "mittragend" vorzugsweise so zu verstehen ist, dass es insbesondere verstärkend, aussteifend, tragend, fahrwerkslastenweiterleitend und/oder abstützend wirkt oder zumindest mitwirkt.

Außerdem ist noch zu erwähnen, dass die Tankeinrichtung einen oder mehrere Tankabschnitte umfassen kann.

Zu erwähnen ist noch, dass die erfindungsgemäße Rahmentragstruktur bzw. die erste Tragkonstruktion und die zweite Tragkonstruktion insbesondere nicht auf zumindest abschnittsweise aus Tragprofilelementen (z.B. Hohl-, U-, I- oder L-Tragprofilelemente) ausgeführte (z.B. leiterrahmenförmige) Ausführungsformen beschränkt ist, sondern z.B. auch zumindest abschnittsweise monocoqueförmige oder semi-monocoqueförmige Ausführungsformen umfasst. Darunter werden insbesondere schalenförmige Strukturen verstanden, die zweckmäßig selbsttragend ausgebildet sind (z.B. aus Blech-, Tiefzieh- oder Verbundmaterial).

Die Erfindung umfasst außerdem ein Nutzfahrzeug, insbesondere einen Lastkraftwagen, vorzugsweise eine Sattelzugmaschine, mit einer wie hierin beschriebenen Rahmentragstruktur.

Die vorstehend beschriebenen Merkmale und bevorzugten Ausführungsformen der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Fig. 1: zeigt eine perspektivische Ansicht einer Rahmentragstruktur für ein Nutzfahrzeug gemäß einer Ausführungsform der Erfindung,
- Fig. 2: zeigt eine Seitenschnittansicht der Rahmentragstruktur der Fig. 1,
- Fig. 3: zeigt eine Draufsicht auf die Rahmentragstruktur der Figuren 1 und 2,
- Fig. 4: zeigt eine Schnittansicht der Rahmentragstruktur der Figuren 1 bis 3,
- Fig. 5: zeigt eine perspektivische Ansicht einer Rahmentragstruktur gemäß einer anderen Ausführungsform der Erfindung,
- Fig. 6: zeigt eine Seitenschnittansicht der Rahmentragstruktur der Fig. 5,
- Fig. 7: zeigt eine Draufsicht auf die Rahmentragstruktur der Figuren 5 und 6,
- Fig. 8: zeigt eine Schnittansicht der Rahmentragstruktur der Figuren 5 bis 7,
- Fig. 9: zeigt eine perspektivische Ansicht einer Rahmentragstruktur gemäß einer wiederum anderen Ausführungsform der Erfindung,
- Fig. 10: zeigt eine Schnittansicht der Rahmentragstruktur der Fig. 9,
- Fig. 11: zeigt eine perspektivische Ansicht einer Rahmentragstruktur gemäß einer wiederum anderen Ausführungsform der Erfindung,
- Fig. 12: zeigt eine Schnittansicht der Rahmentragstruktur der Fig. 11, und
- Fig. 13.: zeigt eine perspektivische Ansicht einer Rahmentragstruktur gemäß einer wiederum anderen Ausführungsform der Erfindung.

Die unter Bezugnahme auf die Figuren beschriebenen Ausführungsformen stimmen teilweise überein, wobei ähnliche oder identische Teile mit den gleichen Bezugszeichen versehen sind und zu deren Erläuterung auch auf die Beschreibung anderer Ausführungsformen oder Figuren verwiesen wird, um Wiederholungen zu vermeiden.

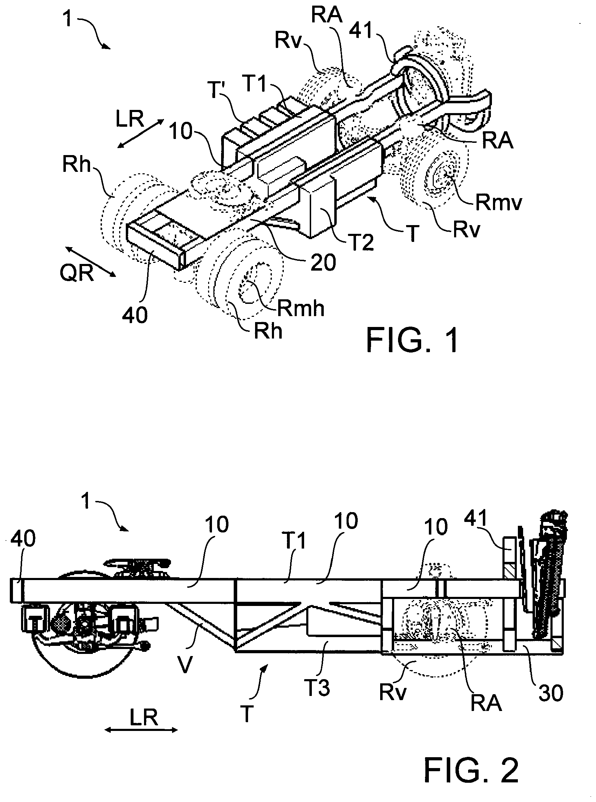

Figur 1 zeigt eine perspektivische Ansicht einer ein Fahrgestell für eine Zugmaschine (Sattelzugmaschine) bildenden Rahmentragstruktur 1, die mit einer Sattelplatte versehen ist und mitunter zum Tragen eines Fahrerhauses (nicht dargestellt) für die Zugmaschine dient.

Die Rahmentragstruktur 1 umfasst eine erste in Längsrichtung LR der Rahmentragstruktur 1 verlaufende Tragkonstruktion 10 und eine zweite in Längsrichtung LR der Rahmentragstruktur 1 verlaufende Tragkonstruktion 20, die in Querrichtung QR der Rahmentragstruktur 1 voneinander beabstandet sind und als Rechteckhohlprofile ausgeführt sind. Die Rahmentragstruktur 1 umfasst ferner mehrere Querträger, z.B. einen hinteren Querträger 40 und einen vorderen Querträger 41, die ebenfalls als Rechteckhohlprofile ausgeführt sind.

Die Rahmentragstruktur 1 ist frontseitig mit einer Kühlanordnung versehen, die einen Motorkühler und einen Ladeluftkühler umfasst. Die Rahmentragstruktur 1 ist zudem mit lenkbaren Vorderrädern Rv und einer Hinterachse mit Hinterrädern Rh versehen. Die Vorderräder Rv sind über Radaufhängungen RA mit der Rahmentragstruktur 1 verbunden und umfassen Radmittelpunkte Rmv, um die sie drehbar sind. Ähnlich umfassen die Hinterräder Rh Radmittelpunkte Rmh, um die sie drehbar sind. Die Hinterräder Rh sind zwillingsbereift, können aber auch einzelbereift ausgeführt werden. Ebenso ist es möglich, dass die Rahmentragstruktur 1 mit mehr als einer Hinterachse versehen wird. Die Rahmentragstruktur 1 kann zudem z.B. mit einer Motoreinrichtung zum Antreiben des Nutzfahrzeugs (z.B. einem Diesel- und/oder Elektromotor), einer Getriebeeinrichtung, einer Antriebswelle, etc. (nicht dargestellt) versehen werden.

Die Rahmentragstruktur 1 umfasst ferner Tankeinrichtungen, die als Kraftstofftank T und Lufttanks T' ausgeführt sind. Die Lufttanks T' sind seitlich außen an dem Kraftstofftank T angebracht. Der Kraftstofftank T ist an die erste Tragkonstruktion 10 und die zweite Tragkonstruktion 20 befestigt.

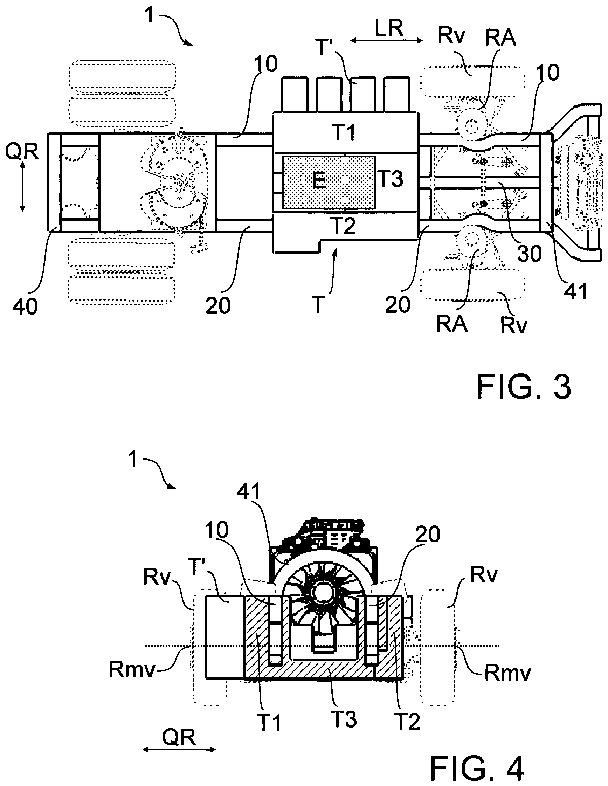

Der Kraftstofftank T weist Durchlassaussparungen auf, die von der ersten Tragkonstruktion 10 und der zweiten Tragkonstruktion 20 durchlaufen werden. Insbesondere umfasst der Kraftstofftank T einen ersten Tankabschnitt T1, der von der ersten Tragkonstruktion 10 durchlaufen wird, und einen zweiten Tankabschnitt T2, der von der zweiten Tragkonstruktion 20 durchlaufen wird. Zudem umfasst der Kraftstofftank T einen dritten Tankabschnitt T3 (siehe z.B. Figur 2), der den ersten Tankabschnitt T1 und den zweiten Tankabschnitt T2 bodenseitig verbindet. Der erste Tankabschnitt T1 und der zweite Tankabschnitt T2 sind als seitliche Schenkelteile ausgeführt und der dritte Tankabschnitt T3 ist als Bodenteil ausgeführt, die zusammen eine im Wesentlichen U-förmige Gestalt bilden (siehe z.B. Figur 4). Die drei Tankabschnitte T1, T2 und T3 sind im Wesentlichen hohlplattenförmig ausgebildet.

Der Kraftstofftank T ist als mittragender Teil der Rahmentragstruktur 1 ausgebildet. Der Kraftstofftank T ist aus Blech- oder Tiefziehmaterial gefertigt und umfasst zweckmäßig Verstärkungsmittel V (siehe z.B. Figur 2), wie etwa Verstärkungsrippen und Verstärkungsstreben, die dafür sorgen, dass der Kraftstofftank T als mittragender Teil der Rahmentragstruktur 1 wirken kann.

Figur 2 zeigt eine Seitenschnittansicht der Rahmentragstruktur 1 der Figur 1. Die erste Tragkonstruktion 10 und die zweite Tragkonstruktion 20 sind mit den Verstärkungsmitteln V verbunden, die zugleich zur Vergrößerung der Biegesteifigkeit der ersten Tragkonstruktion 10 und der zweiten Tragkonstruktion 20 dienen.

Die Rahmentragstruktur 1 umfasst außerdem eine dritte längsverlaufende Tragkonstruktion 30, die zwischen der ersten Tragkonstruktion 10 und der zweiten Tragkonstruktion 20 und unter deren Niveau verläuft. Die dritte Tragkonstruktion 30 ist als Rechteckhohlprofil ausgeführt und dient z.B. zur Abstützung und somit zumindest geringfügigen Entlastung des Kraftstofftanks T. Außerdem ist die dritte Tragkonstruktion 30 mit Lenkerelementen der Radaufhängungen RA verbunden und dient dazu, deren Längs- und Querkräfte aufzunehmen.

Figur 3 zeigt eine Draufsicht auf die Rahmentragstruktur 1 der Figuren 1 und 2. Figur 3 ist insbesondere zu entnehmen, dass der Kraftstofftank T in Querrichtung QR mittig zwischen der ersten Tragkonstruktion 10 und der zweiten Tragkonstruktion 20 verläuft und die erste Tragkonstruktion 10 und die zweite Tragkonstruktion 20 miteinander verbindet. Dadurch kann der Kraftstofftank T als Queraussteifungskonstruktion wirken.

Ferner kann der im Wesentlichen U-förmige Kraftstofftank T dazu dienen, eine in Figur 3 nur schematisch angedeutete Antriebsstrangeinheit E, z.B. einen Dieselmotor und optional eine Getriebeeinrichtung aufzunehmen und zu tragen und von unten und von seitlich außen zumindest abschnittsweise einzufassen. Es ist ebenso möglich, dass die Antriebsstrangeinheit E, z.B. der Dieselmotor und optional die Getriebeeinrichtung, zwischen der ersten Tragkonstruktion 10, der zweiten Tragkonstruktion 20 und der dritten Tragkonstruktion 30 aufgenommen wird und vorzugsweise von der ersten Tragkonstruktion 10, der zweiten Tragkonstruktion 20 und der dritten Tragkonstruktion 30 getragen wird.

Figur 4 zeigt eine Schnittansicht der Rahmentragstruktur 1 der Figuren 1 bis 3 in Längsrichtung LR nach vorne. Figur 4 ist unter anderem zu entnehmen, dass die drei Tankabschnitte T1, T2 und T3 im Wesentlichen hohlplattenförmig ausgeführt sind und eine im Wesentlichen U-förmige Gestalt bilden. Figur 4 ist außerdem zu entnehmen, dass die erste Tragkonstruktion 10 und die zweite Tragkonstruktion 20 den Kraftstofftank T in Längsrichtung LR durchlaufen.

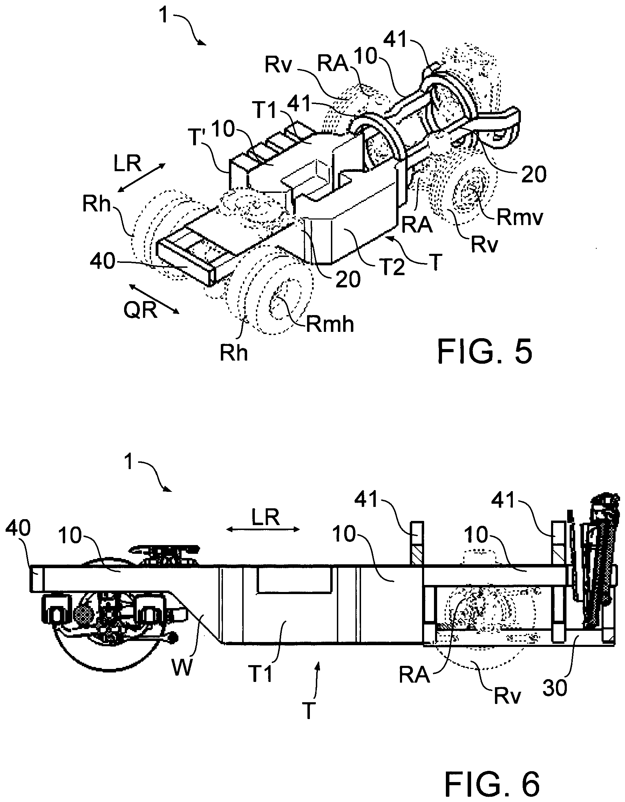

Figur 5 zeigt eine perspektivische Ansicht einer Rahmentragstruktur 1 gemäß einer anderen Ausführungsform der Erfindung.

Eine Besonderheit der in Figur 5 gezeigten Rahmentragstruktur 1 ist, dass der Kraftstofftank T baulich in die erste Tragkonstruktion 10 und die zweite Tragkonstruktion 20 integriert ist und somit mittragender Teil der ersten Tragkonstruktion 10 und der zweiten Tragkonstruktion 20 ist. Insbesondere ist der Tankabschnitt T1 baulich in die erste Tragkonstruktion 10 integriert und bildet somit einen ersten Tanklängsträger und der Tankabschnitt T2 ist baulich in die zweite Tragkonstruktion 20 integriert und bildet somit einen zweiten Tanklängsträger.

Der Kraftstofftank T ist aus Blech- oder Tiefziehmaterial gefertigt. Das Blech- oder Tiefziehmaterial ist somit Teil der ersten Tragkonstruktion 10 und der zweiten Tragkonstruktion 20 und zugleich Teil des Kraftstofftanks T. Somit sind die erste Tragkonstruktion 10 und die zweite Tragkonstruktion 20 teilweise aus Rechteckhohlprofilelementen und teilweise aus Blech- oder Tiefziehmaterial ausgebildet.

Figur 6 zeigt eine Seitenschnittansicht der Rahmentragstruktur 1 der Figur 5. Der erste Tankabschnitt T1 und der zweite Tankabschnitt T2 umfassen einen aufgeweiteten Tankabschnitt W, der zur Vergrößerung der Biegesteifigkeit und zudem zur Vergrößerung des Kraftstoffaufnahmevermögens dient. Die aufgeweiteten Tankabschnitte W sind nach unten, seitlich nach innen und seitlich nach außen aufgeweitet.

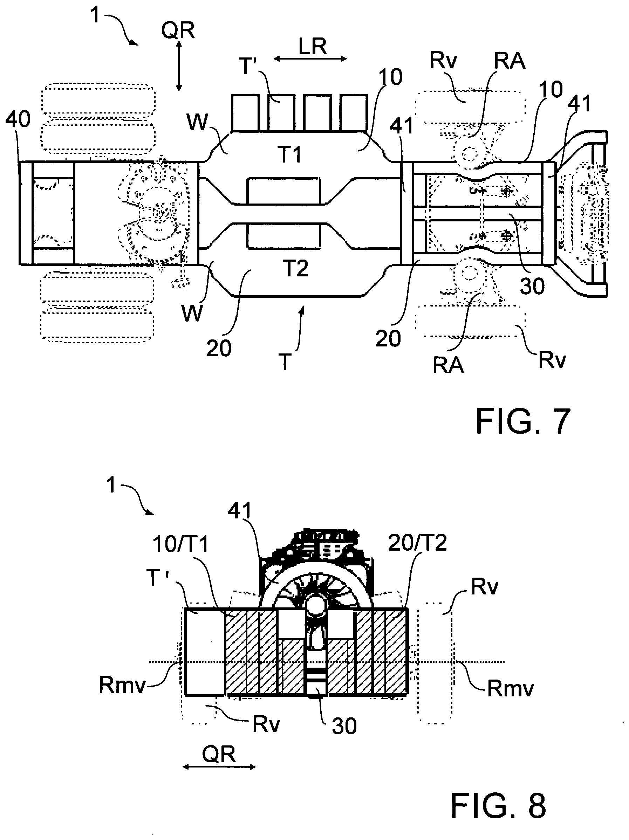

Figur 7 zeigt eine Draufsicht auf die Rahmentragstruktur 1 der Figuren 5 und 6. Figur 7 ist z.B. zu entnehmen, dass der Kraftstofftank T im Gegensatz zu der in den Figuren 1 bis 4 gezeigten Rahmentragstruktur 1 keinen als Bodenteil ausgebildeten dritten hohlplattenförmigen Tankabschnitt T3 umfasst.

Figur 8 zeigt eine Schnittansicht der Rahmenstruktur 1 der Figuren 5 bis 7 in Längsrichtung LR nach vorne. Figur 8 kann z.B. entnommen werden, dass im Gegensatz zu der in den Figuren 1 bis 4 gezeigten Rahmentragstruktur 1 die erste Tragkonstruktion 10 und zweite Tragkonstruktion 20 den Kraftstofftank T nicht durchlaufen, sondern der Kraftstofftank T quasi selbst abschnittsweise die erste Tragkonstruktion 10 und die zweite Tragkonstruktion 20 darstellt. Figur 8 zeigt ferner, dass der Kraftstofftank T durch die dritte Tragkonstruktion 30 gestützt wird.

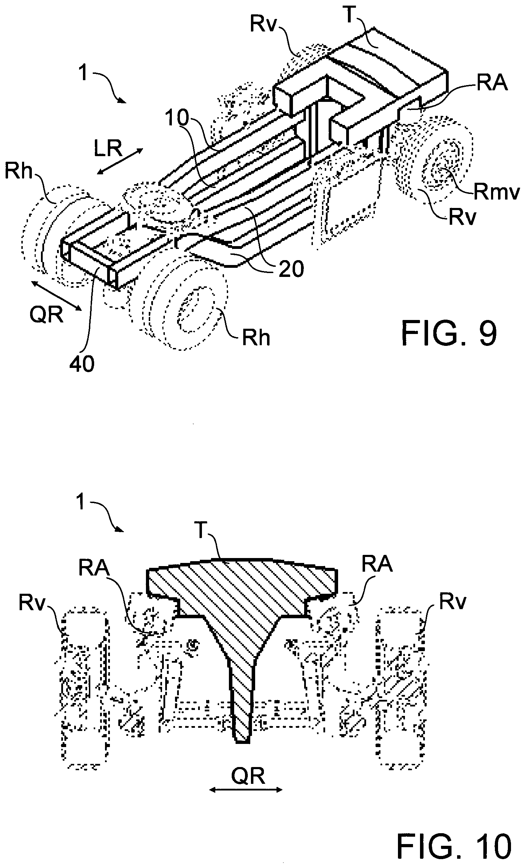

Figur 9 zeigt eine perspektivische Ansicht einer Rahmentragstruktur 1 gemäß einer wiederum anderen Ausführungsform der Erfindung. Eine Besonderheit der in Figur 9 gezeigten Rahmentragstruktur 1 ist, dass der Kraftstofftank T einen im Wesentlichen horizontal ausgerichteten Flanschteil umfasst, der die erste Tragkonstruktion 10 und die zweite Tragkonstruktion 20 verbindet. Zudem verläuft der horizontal ausgerichtete Flanschteil zwischen den Vorderrädern Rv, ragt über deren Radmittelpunkte Rmv nach vorne hinaus und ist über dem Niveau der ersten Rahmentragstruktur 10 und der zweiten Rahmentragstruktur 20 angeordnet. Der Kraftstofftank T, insbesondere der horizontal ausgerichtete Flanschteil, dient dazu, ein Fahrerhaus (nicht dargestellt) für das Nutzfahrzeug zu tragen und zugleich als Bodenplatte für dasselbe zu wirken. Das Fahrerhaus per se kann im Wesentlichen gemäß Stand der Technik ausgeführt sein.

Eine weitere Besonderheit der in Figur 9 gezeigten Rahmentragstruktur 1 ist, dass der Kraftstofftank T auf Feder- und/oder Dämpferelementen der Radaufhängungen RA für die Vorderräder Rv gelagert ist und dazu dient, deren im Wesentlichen vertikalen Kräfte aufzunehmen. Der Kraftstofftank T wirkt als Dämpferträger der Feder- und/oder Dämpferelemente der Radaufhängungen RA.

Eine andere Besonderheit der in Figur 9 gezeigten Rahmentragstruktur 1 ist, dass die erste Tragkonstruktion 10 und die zweite Tragkonstruktion 20 in eine Oberzugkonstruktion und eine Unterzugkonstruktion aufgeteilt sind, die heckseitig zusammengeführt sind und frontseitig mit dem Kraftstofftank T verbunden sind. Die Oberzugkonstruktion verläuft über dem Niveau der Radmittelpunkte Rmv der Vorderräder Rv und die Unterzugkonstruktion darunter.

Figur 10 zeigt eine Schnittansicht der Rahmentragstruktur 1 der Figur 9 in Längsrichtung LR nach vorne. Figur 10 ist mitunter zu entnehmen, dass der Kraftstofftank T oben auf oberen Enden der Feder- und/oder Dämpferelemente der Radaufhängungen RA der Vorderräder Rv angeordnet ist und als Dämpferträger derselben wirkt.

Figur 10 ist außerdem zu entnehmen, dass der Kraftstofftank T einen im Wesentlichen horizontalen Flanschteil und einen von dem Flanschteil nach unten erstreckenden Stegteil umfasst, die eine im Wesentliche T- oder V-förmige Gestalt bilden.

Figur 10 ist ferner zu entnehmen, dass der Kraftstofftank T bodenseitig mit Lenkelementen der Radaufhängungen RA der Vorderräder Rv verbunden ist und dazu dient, deren Längs- und Querkräfte aufzunehmen.

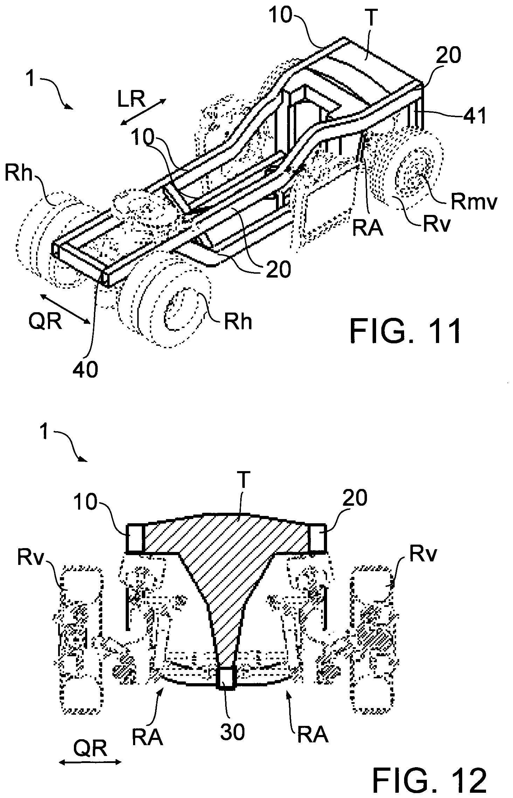

Figur 11 zeigt eine Rahmentragstruktur 1 gemäß einer wiederum anderen Ausführungsform der Erfindung. Eine Besonderheit der in Figur 11 gezeigten Rahmentragstruktur 1 ist, dass der Kraftstofftank T einen im Wesentlichen horizontal ausgerichteten Flanschabschnitt umfasst, der die erste Tragkonstruktion 10 und die zweite Tragkonstruktion 20 verbindet. Zudem verläuft der horizontal ausgerichtete Flanschabschnitt zwischen den Vorderrädern Rv, ragt über deren Radmittelpunkte Rmv nach vorne hinaus und verläuft im Wesentlich auf dem Niveau der ersten Rahmentragstruktur 10 und der zweiten Rahmentragstruktur 20. Der Kraftstofftank T wirkt als Queraussteifungskonstruktion und dient dazu, das Fahrerhaus für das Nutzfahrzeug zu tragen. Zudem kann der Kraftstofftank T wiederum als zumindest geringfügig mittragende Bodenplatte für das Nutzfahrzeug dienen.

Figur 12 zeigt eine Schnittansicht der Rahmentragstruktur 1 der Figur 11 in Längsrichtung LR nach vorne. Der Kraftstofftank T ist oben auf oberen Enden der Feder- und/oder Dämpferelemente der Radaufhängungen RA für die Vorderräder Rv des Nutzfahrzeugs angeordnet ist. Die Lenkerelemente der Radaufhängungen RA der Vorderräder Rv sind mit der dritten längsverlaufenden Tragkonstruktion 30 verbunden.

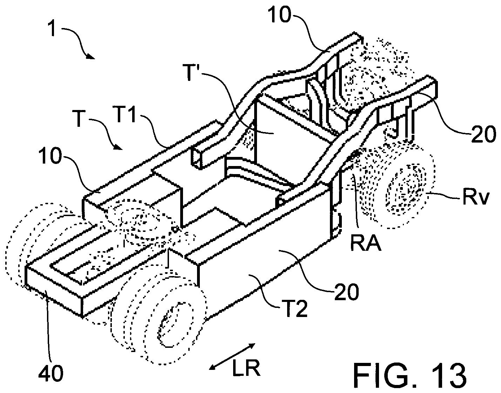

Figur 13 zeigt eine perspektivische Ansicht einer Rahmentragstruktur 1 gemäß einer noch anderen Ausführungsform der Erfindung. Eine Besonderheit der in Figur 13 gezeigten Rahmentragstruktur 1 ist wiederum, dass der Kraftstofftank T in die erste Tragkonstruktion 10 und die zweite Tragkonstruktion 20 baulich integriert ist und somit mittragender Teil der ersten Tragkonstruktion 10 und der zweiten Tragkonstruktion 20 ist.

Eine weitere Besonderheit der in Figur 13 gezeigten Rahmentragstruktur 1 ist der Lufttank T'. Der Lufttank T' ist im Wesentlichen hohlplattenförmig ausgeführt und verbindet die erste Tragkonstruktion 10 mit der zweiten Tragkonstruktion 20. Der Lufttank T' wirkt als Queraussteifungskonstruktion und als somit mittragender Teil der Rahmentragstruktur 1. Der Lufttank T' ist in Längsrichtung LR vor der Motoreinrichtung zum Antreiben des Nutzfahrzeugs (nicht gezeigt in Figur 13) angeordnet. Der Lufttank T' kann mit einer Lüftungsöffnung (nicht gezeigt in Figur 13) versehen sein, die zur Kühlung der Motoreinrichtung dient. Ebenso können die hohlplattenförmigen Tankabschnitte T1 und T2 des Kraftstofftanks T mit einer Lüftungsöffnung versehen sein, die Kühlung der Motoreinrichtung dient.

## Patentansprüche

1. Rahmentragstruktur (1) für ein Nutzfahrzeug, insbesondere einen Lastkraftwagen, vorzugsweise eine Sattelzugmaschine, mit:
- einer ersten längsverlaufenden Tragkonstruktion (10) und einer zweiten längsverlaufenden Tragkonstruktion (20), die in Querrichtung (QR) der Rahmentragstruktur (1) voneinander beabstandet sind, und
- mindestens einer Tankeinrichtung (T) zur Fluidaufnahme, insbesondere einer Kraftstofftankeinrichtung zur Aufnahme von Kraftstoff zum Betrieb einer Motoreinrichtung und/oder einer Lufttankeinrichtung (T') zur Aufnahme von Luft,
wobei
- die Tankeinrichtung (T) als mittragender Teil der Rahmentragstruktur (1) ausgeführt ist, insbesondere als mittragender Teil der ersten Tragkonstruktion (10) und der zweiten Tragkonstruktion (20),
**dadurch gekennzeichnet, dass**
- die erste Tragkonstruktion (10) und die zweite Tragkonstruktion (20) zumindest einen aufgeweiteten Tragabschnitt (W) umfassen, der zur Vergrößerung der Biegesteifigkeit dient.

2. Rahmentragstruktur (1) nach Anspruch 1, **dadurch gekennzeichnet, dass** die Tankeinrichtung (T) als Queraussteifungskonstruktion oder zumindest Teil davon wirkt..

3. Rahmentragstruktur (1) nach Anspruch 1 oder 2, **dadurch gekennzeichnet, dass** die Tankeinrichtung (T) dazu dient, eine Antriebsstrangeinheit für das Nutzfahrzeug zu tragen.

4. Rahmentragstruktur (1) nach einem der vorhergehenden Ansprüche, **dadurch gekennzeichnet, dass** die Tankeinrichtung (T) dazu dient, Kräfte aus den Radaufhängungen (RA) für die Vorderräder (Rv) des Nutzfahrzeugs aufzunehmen.

5. Rahmentragstruktur (1) nach Anspruch 4, **dadurch gekennzeichnet, dass**
- die Tankeinrichtung (T) dazu dient, Kräfte aus Feder- und/oder Dämpferelementen der Radaufhängungen (RA) für die Vorderräder (Rv) des Nutzfahrzeugs aufzunehmen und vorzugsweise als Dämpferträger für die Feder- und/oder Dämpferefemente zu wirken, und/oder
- die Tankeinrichtung (T) dazu dient, Kräfte aus den Lenkerelementen der Radaufhängungen (RA) für die Vorderräder (Rv) des Nutzfahrzeugs aufzunehmen.

6. Rahmentragstruktur (1) nach einem der vorhergehenden Ansprüche, **dadurch gekennzeichnet, dass** die Tankeinrichtung (T) dazu dient, ein Fahrerhaus für das Nutzfahrzeug oder zumindest Teile davon zu tragen, und/oder als Unterbau für das Fahrerhaus dient.

7. Rahmentragstruktur (1) nach einem der vorhergehenden Ansprüche, **dadurch gekennzeichnet, dass** die Tankeinrichtung (T) baulich in die erste Tragkonstruktion (10) und die zweite Tragkonstruktion (20) integriert ist und vorzugsweise somit als erster Tanklängsträger und zweiter Tanklängsträger wirkt.

8. Rahmentragstruktur (1) nach einem der vorhergehenden Ansprüche, **dadurch gekennzeichnet, dass** die Tankeinrichtung (T) Durchlassaussparungen aufweist, die von der ersten Tragkonstruktion (10) und der zweiten Tragkonstruktion (20) durchlaufen werden.

9. Rahmentragstruktur (1) nach einem der vorhergehenden Ansprüche, **dadurch gekennzeichnet, dass** sich die Tankeinrichtung (T) von der ersten Tragkonstruktion (10) zu der zweiten Tragkonstruktion (20) erstreckt und zweckmäßig die erste Tragkonstruktion (10) mit der zweiten Tragkonstruktion (20) verbindet.

10. Rahmentragstruktur (1) nach einem der vorhergehenden Ansprüche, **dadurch gekennzeichnet, dass** die Tankeinrichtung (T) die erste Tragkonstruktion (10) und die zweite Tragkonstruktion (20) zumindest abschnittsweise einfasst, zweckmäßig von unten und/oder von seitlich außen.

11. Rahmentragstruktur (1) nach einem der vorhergehenden Ansprüche, **dadurch gekennzeichnet, dass** die Tankeinrichtung (T) von unten an die erste Tragkonstruktion (10) und die zweite Tragkonstruktion (20) angebracht ist.

12. Rahmentragstruktur (1) nach einem der vorhergehenden Ansprüche, **dadurch gekennzeichnet, dass** die Tankeinrichtung (T) zwischen Vorderrädern (Rv) für das Nutzfahrzeug verläuft und vorzugsweise über deren Mittelpunkte (Rmv) nach vorne hinaus ragt.

13. Rahmentragstruktur (1) nach einem der vorhergehenden Ansprüche, **dadurch gekennzeichnet, dass** die Tankeinrichtung (T) aus zumindest einem im Wesentlichen hohlplattenförmigen Tankabschnitt ausgebildet ist, der im Wesentlichen horizontal und/oder im Wesentlichen vertikal ausgerichtet ist.

14. Rahmentragstruktur (1) nach einem der vorhergehenden Ansprüche, **dadurch gekennzeichnet, dass** die Tankeinrichtung (T)
- ein Bodenteil und zwei im Wesentlichen hohlplattenförmige äußere Schenkelteile umfasst, die eine im Wesentlichen U-förmige Gestalt bilden, oder
- einen im Wesentlichen horizontalen Flanschteil und einen von dem Flanschteil erstreckenden Stegteil umfasst, die eine im Wesentlichen L-, T- oder V-förmige Gestalt bilden.

15. Rahmentragstruktur (1) nach einem der vorhergehenden Ansprüche, **dadurch gekennzeichnet, dass** die Tankeinrichtung (T) zumindest ein Schwallblech und/oder zumindest ein Verstärkungsmittel (V) umfasst, das dafür sorgt, dass die Tankeinrichtung (T) als mittragender Teil der Rahmentragstruktur (1) wirken kann.

16. Rahmentragstruktur (1) nach einem der vorhergehenden Ansprüche, **dadurch gekennzeichnet, dass** die Tankeinrichtung (T) zumindest einen aufgeweiteten Tankbereich (W) umfasst, der zur Vergrößerung des Tankaufnahmevermögens und/oder zur Vergrößerung der Biegesteifigkeit dient.

17. Rahmentragstruktur (1) nach einem der vorhergehenden Ansprüche, **dadurch gekennzeichnet, dass** die Tankeinrichtung (T) einen Aufnahmeraum schafft, der dazu dient" eine Motoreinrichtung zum Antreiben des Nutzfahrzeugs und/oder eine Getriebeeinrichtung für das Nutzfahrzeug aufzunehmen und vorzugsweise zumindest abschnittsweise einzufassen.

18. Rahmentragstruktur (1) nach einem der vorhergehenden Ansprüche, **dadurch gekennzeichnet, dass** die Tankeinrichtung (T) in eine Oberzugkonstruktion und eine Unterzugkonstruktion aufgeteilt ist.

19. Rahmentragstruktur (1) nach einem der vorhergehenden Ansprüche, **dadurch gekennzeichnet, dass** die erste Tragkonstruktion (10) und die zweite Tragkonstruktion (20) in eine Oberzugkonstruktion und eine Unterzugkonstruktion aufgeteilt sind.

20. Rahmentragstruktur (1) nach Anspruch 18 oder 19, **dadurch gekennzeichnet, dass** die Unterzugkonstruktion unter dem Niveau der Radmittelpunkte (Rmv) für die Vorderräder (Rv) des Nutzfahrzeugs verläuft und die Oberzugkonstruktion darüber.

21. Rahmentragstruktur (1) nach einem der vorhergehenden Ansprüche, **dadurch gekennzeichnet, dass** die erste Tragkonstruktion (10) und die zweite Tragkonstruktion (20) Hohlprofilelemente umfasst.

22. Rahmentragstruktur (1) nach einem der vorhergehenden Ansprüche, **dadurch gekennzeichnet, dass** die Tankeinrichtung (T) oder die erste Tragkonstruktion (10) und die zweite Tragkonstruktion (20) von unten durch Radaufhängungen (RA) getragen wird.

23. Rahmentragstruktur (1) nach einem der vorhergehenden Ansprüche, **dadurch gekennzeichnet, dass** die Rahmentragstruktur (1) eine dritte längsverlaufende Tragkonstruktion (30) umfasst, die zwischen der ersten Tragkonstruktion (10) und der zweiten Tragkonstruktion (20) verläuft und vorzugsweise unter deren Niveau.

24. Rahmentragstruktur (1) nach Anspruch 23, **dadurch gekennzeichnet, dass** die dritte Tragkonstruktion (30) zur Abstützung und somit zumindest geringfügigen Entlastung der Tankeinrichtung (T) dient und/oder mit Lenkerelementen der Radaufhängungen (RA) für die Vorderräder (Rv) des Nutzfahrzeugs verbunden ist und dazu dient, deren Kräfte aufzunehmen.

25. Rahmentragstruktur (1) nach einem der vorhergehenden Ansprüche, **dadurch gekennzeichnet, dass** die Tankeinrichtung (T), die erste Tragkonstruktion (10) und/oder die zweite Tragkonstruktion (20) mit zumindest einer Lüftungsöffnung versehen ist, die insbesondere zur Kühlung einer Motoreinrichtung zum Antreiben des Nutzfahrzeugs dient.

26. Rahmentragstruktur (1) nach einem der vorhergehenden Ansprüche, **dadurch gekennzeichnet, dass** die Tankeinrichtung (T) und/oder die erste Tragkonstruktion (10) und die zweite Tragkonstruktion (20) oben auf oberen Enden der Feder- und/oder Dämpferelemente der Radaufhängungen (RA) für die Vorderräder (Rv) des Nutzfahrzeugs angeordnet ist.

27. Rahmentragstruktur (1) nach einem der vorhergehenden Ansprüche, **dadurch gekennzeichnet, dass** die Tankeinrichtung (T) innenseitig zumindest abschnittsweise mit Dichtmaterial, insbesondere Kunststoff, ausgekleidet ist oder ein Kunststofftank in die Tankeinrichtung (T) eingebaut ist, der die Fluidaufnahme übernimmt.

28. Rahmentragstruktur (1) nach einem der vorhergehenden Ansprüche, **dadurch gekennzeichnet, dass** die erste Tragkonstruktion (10) und die zweite Tragkonstruktion (20) aus Blech- oder Tiefziehmaterial gefertigt sind und mit Verstärkungsmitteln versehen sind.

29. Rahmentragstruktur (1) nach einem der vorhergehenden Ansprüche, **dadurch gekennzeichnet, dass** die Tankeinrichtung (T) in einen ersten Tankabschnitt (T1) und einen zweiten Tankabschnitt (T2) aufgeteilt ist, die über eine Verbindungseinrichtung miteinander verbunden sind, aus der die Ansaugung des Fluids erfolgt.

30. Nutzfahrzeug, insbesondere Lastkraftwagen, vorzugsweise Sattelzugmaschine, **gekennzeichnet durch** eine Rahmentragstruktur (1) nach einem der vorhergehenden Ansprüche.

## Claims

1. Supporting frame structure (1) for a utility vehicle, in particular a heavy goods vehicle, preferably a semitrailer tractor, having:
- a first longitudinally running supporting construction (10) and a second longitudinally running supporting construction (20), said supporting constructions being spaced apart from one another in a transverse direction (QR) of the supporting frame structure (1), and
- at least one tank device (T) for accommodating fluid, in particular a fuel tank unit for accommodating fuel for the operation of a motor unit and/or an air tank unit (T') for accommodating air,
wherein
- the tank unit (T) is formed as a jointly supporting part of the supporting frame structure (1), in particular as a jointly supporting part of the first supporting construction (10) and of the second supporting construction (20),
**characterized in that**
- the first supporting construction (10) and the second supporting construction (20) comprise at least one widened supporting portion (W) which serves for increasing the flexural rigidity.

2. Supporting frame structure (1) according to Claim 1, **characterized in that** the tank unit (T) acts as a transverse stiffening construction or at least as part thereof.

3. Supporting frame structure (1) according to Claim 1 or 2, **characterized in that** the tank unit (T) serves for supporting a drivetrain unit for the utility vehicle.

4. Supporting frame structure (1) according to one of the preceding claims, **characterized in that** the tank unit (T) serves for absorbing forces from the wheel suspension units (RA) for the front wheels (Rv) of the utility vehicle.

5. Supporting frame structure (1) according to Claim 4, **characterized in that**
- the tank unit (T) serves to absorb forces from spring and/or damper elements of the wheel suspension units (RA) for the front wheels (Rv) of the utility vehicle and preferably to act as a damper support for the spring and/or damper elements, and/or
- the tank unit (T) serves to absorb forces from the link elements of the wheel suspension units (RA) for the front wheels (Rv) of the utility vehicle.

6. Supporting frame structure (1) according to one of the preceding claims, **characterized in that** the tank unit (T) serves for supporting a driver's cab for the utility vehicle or at least parts thereof and/or serves as a substructure for the driver's cab.

7. Supporting frame structure (1) according to one of the preceding claims, **characterized in that** the tank unit (T) is structurally integrated into the first supporting construction (10) and the second supporting construction (20) and preferably thus acts as a first tank longitudinal beam and second tank longitudinal beam.

8. Supporting frame structure (1) according to one of the preceding claims, **characterized in that** the tank unit (T) has passage cutouts through which the first supporting construction (10) and the second supporting construction (20) extend.

9. Supporting frame structure (1) according to one of the preceding claims, **characterized in that** the tank unit (T) extends from the first supporting construction (10) to the second supporting construction (20) and expediently connects the first supporting construction (10) to the second supporting construction (20).

10. Supporting frame structure (1) according to one of the preceding claims, **characterized in that** the tank unit (T) encloses the first supporting construction (10) and the second supporting construction (20) at least in sections, expediently from below and/or laterally from the outside.

11. Supporting frame structure (1) according to one of the preceding claims, **characterized in that** the tank unit (T) is mounted on the first supporting construction (10) and on the second supporting construction (20) from below.

12. Supporting frame structure (1) according to one of the preceding claims, **characterized in that** the tank unit (T) runs between front wheels (Rv) for the utility vehicle and preferably projects forwards beyond the central points (Rmv) thereof.

13. Supporting frame structure (1) according to one of the preceding claims, **characterized in that** the tank unit (T) is formed from at least one tank portion which is substantially of hollow plate form and which is oriented substantially horizontally and/or substantially vertically.

14. Supporting frame structure (1) according to one of the preceding claims, **characterized in that** the tank unit (T)
- comprises a base part and two outer limb parts substantially of hollow plate form, which base part and outer limb parts form a substantially U-shaped configuration, or
- a substantially horizontal flange part and a web part extending from the flange part, which flange part and web part form a substantially L-shaped, T-shaped or V-shaped configuration.

15. Supporting frame construction (1) according to one of the preceding claims, **characterized in that** the tank unit (T) comprises at least one baffle plate and/or at least one reinforcement means (V) which ensures that the tank unit (T) can act as a jointly supporting part of the supporting frame structure (1).

16. Supporting frame structure (1) according to one of the preceding claims, **characterized in that** the tank unit (T) comprises at least one widened tank region (W) which serves for increasing the tank storage capacity and/or for increasing the flexural rigidity.

17. Supporting frame structure (1) according to one of the preceding claims, **characterized in that** the tank unit (T) provides a receiving space which serves for accommodating, and preferably enclosing at least in sections, a motor unit for driving the utility vehicle and/or a transmission unit for the utility vehicle.

18. Supporting frame structure (1) according to one of the preceding claims, **characterized in that** the tank unit (T) is divided into an upper construction strand and a lower construction strand.

19. Supporting frame structure (1) according to one of the preceding claims, **characterized in that** the first supporting construction (10) and the second supporting construction (20) are divided into an upper construction strand and a lower construction strand.

20. Supporting frame structure (1) according to Claim 18 or 19, **characterized in that** the lower construction strand runs below the level of the wheel central points (Rmv) for the front wheels (Rv) of the utility vehicle, and the upper construction strand runs above said wheel central points.

21. Supporting frame structure (1) according to one of the preceding claims, **characterized in that** the first supporting construction (10) and the second supporting construction (20) comprise hollow profile elements.

22. Supporting frame structure (1) according to one of the preceding claims, **characterized in that** the tank unit (T) or the first supporting construction (10) and the second supporting construction (20) are supported from below by wheel suspension units (RA).

23. Supporting frame structure (1) according to one of the preceding claims, **characterized in that** the supporting frame structure (1) comprises a third longitudinally running supporting construction (30) which runs between the first supporting construction (10) and the second supporting construction (20) and preferably below the level thereof.

24. Supporting frame structure (1) according to Claim 23, **characterized in that** the third supporting construction (30) serves for supporting the tank unit and thus at least slightly relieving the latter of load, and/or is connected to link elements of the wheel suspension units (RA) for the front wheels (Rv) of the utility vehicle and serves to absorb the forces thereof.

25. Supporting frame structure (1) according to one of the preceding claims, **characterized in that** the tank unit (T), the first supporting construction (10) and/or the second supporting construction (20) are/is provided with at least one ventilation opening which serves in particular for the cooling of a motor unit for driving the utility vehicle.

26. Supporting frame structure (1) according to one of the preceding claims, **characterized in that** the tank unit (T) and/or the first supporting construction (10) and the second supporting construction (20) are/is arranged on top of upper ends of the spring and/or damper elements of the wheel suspension units (RA) for the front wheels (Rv) of the utility vehicle.

27. Supporting frame structure (1) according to one of the preceding claims, **characterized in that** the tank unit (T) is lined on the inside at least in sections with sealing material, in particular plastic, or a plastic tank is installed into the tank unit (T), which plastic tank serves to accommodate fluid.

28. Supporting frame structure (1) according to one of the preceding claims, **characterized in that** the first supporting construction (10) and the second supporting construction (20) are manufactured from sheet-metal or deep-drawn material and are provided with reinforcement means.

29. Supporting frame structure (1) according to one of the preceding claims, **characterized in that** the tank unit (T) is divided into a first tank portion (T1) and a second tank portion (T2) which are connected to one another by means of a connecting device from which the fluid is extracted by suction.

30. Utility vehicle, in particular heavy goods vehicle, preferably semitrailer tractor, **characterized by** a supporting frame structure (1) according to one of the preceding claims.

## Revendications

1. Structure de châssis (1) pour un véhicule utilitaire, en particulier un camion, de préférence un tracteur de semi-remorque, avec:
- une première construction portante longitudinale (10) et une deuxième construction portante longitudinale (20), qui sont espacées l'une de l'autre dans la direction transversale (QR) de la structure de châssis (1), et
- au moins un dispositif de réservoir (T) destiné à contenir un fluide, en particulier un dispositif de réservoir de carburant destiné à contenir du carburant pour le fonctionnement d'un dispositif de moteur et/ou un dispositif de réservoir d'air (T') destiné à contenir de l'air,
dans laquelle
- le dispositif de réservoir (T) est réalisé sous la forme d'une partie co-portante de la structure de châssis (1), en particulier de partie co-portante de la première construction portante (10) et de la deuxième construction portante (20),
**caractérisée en ce que**
- la première construction portante (10) et la deuxième construction portante (20) comprennent au moins une partie portante élargie (W), qui sert pour augmenter la rigidité à la flexion.

2. Structure de châssis (1) selon la revendication 1, **caractérisée en ce que** le dispositif de réservoir (T) agit comme une construction de raidissement transversale ou au moins une partie de celle-ci.

3. Structure de châssis (1) selon la revendication 1 ou 2, **caractérisée en ce que** le dispositif de réservoir (T) sert pour porter une unité de la chaîne cinématique pour le véhicule utilitaire.

4. Structure de châssis (1) selon l'une quelconque des revendications précédentes, **caractérisée en ce que** le dispositif de réservoir (T) sert pour reprendre des forces provenant des suspensions de roues (RA) pour les roues avant (Rv) du véhicule utilitaire.

5. Structure de châssis (1) selon la revendication 4, **caractérisée en ce que**
- le dispositif de réservoir (T) sert pour reprendre des forces provenant des éléments de ressorts et/ou d'amortisseurs des suspensions de roues (RA) pour les roues avant (Rv) du véhicule utilitaire et de préférence pour agir en tant que support d'amortisseurs pour les éléments de ressorts et/ou d'amortisseurs, et/ou
- le dispositif de réservoir (T) sert pour reprendre des forces provenant des éléments de bielles des suspensions de roues (RA) pour les roues avant (Rv) du véhicule utilitaire.

6. Structure de châssis (1) selon l'une quelconque des revendications précédentes, **caractérisée en ce que** le dispositif de réservoir (T) sert pour porter une cabine de conducteur pour le véhicule utilitaire ou au moins des parties de celle-ci, et/ou comme infrastructure pour la cabine de conducteur.

7. Structure de châssis (1) selon l'une quelconque des revendications précédentes, **caractérisée en ce que** le dispositif de réservoir (T) est intégré par construction dans la première construction portante (10) et dans la deuxième construction portante (20) et agit de préférence ainsi comme premier longeron de réservoir et comme deuxième longeron de réservoir.

8. Structure de châssis (1) selon l'une quelconque des revendications précédentes, **caractérisée en ce que** le dispositif de réservoir (T) présente des ouvertures de passage, qui sont traversées par la première construction portante (10) et par la deuxième construction portante (20).

9. Structure de châssis (1) selon l'une quelconque des revendications précédentes, **caractérisée en ce que** le dispositif de réservoir (T) s'étend de la première construction portante (10) à la deuxième construction portante (20) et relie avantageusement la première construction portante (10) à la deuxième construction portante (20).

10. Structure de châssis (1) selon l'une quelconque des revendications précédentes, **caractérisée en ce que** le dispositif de réservoir (T) encadre au moins partiellement la première construction portante (10) et la deuxième construction portante (20), avantageusement par le bas et/ou latéralement par l'extérieur.

11. Structure de châssis (1) selon l'une quelconque des revendications précédentes, **caractérisée en ce que** le dispositif de réservoir (T) est installé par-dessous sur la première construction portante (10) et sur la deuxième construction portante (20).

12. Structure de châssis (1) selon l'une quelconque des revendications précédentes, **caractérisée en ce que** le dispositif de réservoir (T) s'étend entre des roues avant (Rv) pour le véhicule utilitaire et de préférence se prolonge vers l'avant au-delà de leurs points centraux (Rmv).

13. Structure de châssis (1) selon l'une quelconque des revendications précédentes, **caractérisée en ce que** le dispositif de réservoir (T) est formé d'au moins une partie de réservoir essentiellement en forme de plaque creuse, qui est orientée essentiellement en direction horizontale et/ou essentiellement en direction verticale.

14. Structure de châssis (1) selon l'une quelconque des revendications précédentes, **caractérisée en ce que** le dispositif de réservoir (T)
- comprend une partie de fond et deux parties de branches extérieures essentiellement en forme de plaque creuse, qui forment une configuration essentiellement en forme de U, ou
- comprend une partie d'aile essentiellement horizontale et une partie d'âme s'étendant à partir de la partie d'aile, qui forment une configuration essentiellement en forme de L, de T ou de V.

15. Structure de châssis (1) selon l'une quelconque des revendications précédentes, **caractérisée en ce que** le dispositif de réservoir (T) comprend au moins un déflecteur et/ou au moins un moyen de renforcement (V), qui assure que le dispositif de réservoir (T) peut faire office de partie co-portante de la structure de châssis (1).

16. Structure de châssis (1) selon l'une quelconque des revendications précédentes, **caractérisée en ce que** le dispositif de réservoir (T) comprend au moins une région de réservoir élargie (W), qui sert pour augmenter la capacité du réservoir et/ou pour accroître la rigidité.

17. Structure de châssis (1) selon l'une quelconque des revendications précédentes, **caractérisée en ce que** le dispositif de réservoir (T) procure un espace de logement, qui sert pour contenir un dispositif de moteur pour entraîner le véhicule utilitaire et/ou un dispositif de transmission pour le véhicule utilitaire et de préférence les encadrer au moins localement.

18. Structure de châssis (1) selon l'une quelconque des revendications précédentes, **caractérisée en ce que** le dispositif de réservoir (T) est divisé en une construction surélevée et une construction surbaissée.

19. Structure de châssis (1) selon l'une quelconque des revendications précédentes, **caractérisée en ce que** la première construction portante (10) et la deuxième construction portante (20) sont divisées en une construction surélevée et une construction surbaissée.

20. Structure de châssis (1) selon la revendication 18 ou 19, **caractérisée en ce que** la construction surbaissée s'étend en dessous du niveau des points centraux des roues (Rmv) pour les roues avant (Rv) du véhicule utilitaire et la construction surélevée s'étend au-dessus.

21. Structure de châssis (1) selon l'une quelconque des revendications précédentes, **caractérisée en ce que** la première construction portante (10) et la deuxième construction portante (20) comprennent des éléments profilés creux.

22. Structure de châssis (1) selon l'une quelconque des revendications précédentes, **caractérisée en ce que** le dispositif de réservoir (T) ou la première construction portante (10) et la deuxième construction portante (20) sont portées par-dessous par des suspensions de roues (RA).

23. Structure de châssis (1) selon l'une quelconque des revendications précédentes, **caractérisée en ce que** la structure de châssis (1) comprend une troisième construction portante longitudinale (30), qui s'étend entre la première construction portante (10) et la deuxième construction portante (20) et de préférence en dessous de leur niveau.

24. Structure de châssis (1) selon la revendication 23, **caractérisée en ce que** la troisième construction portante (30) sert pour le soutien et dès lors au moins un léger délestage du dispositif de réservoir (T) et/ou est reliée à des éléments de bielles des suspensions de roues (RA) pour les roues avant (Rv) du véhicule utilitaire et sert pour reprendre leurs forces.

25. Structure de châssis (1) selon l'une quelconque des revendications précédentes, **caractérisée en ce que** le dispositif de réservoir (T), la première construction portante (10) et/ou la deuxième construction portante (20) est dotée d'au moins une ouverture de ventilation, qui sert en particulier pour le refroidissement d'un dispositif de moteur destiné à entraîner le véhicule utilitaire.

26. Structure de châssis (1) selon l'une quelconque des revendications précédentes, **caractérisée en ce que** le dispositif de réservoir (T) et/ou la première construction portante (10) et la deuxième construction portante (20) est disposée en haut sur des extrémités supérieures des éléments de ressorts et/ou d'amortisseurs des suspensions de roues (RA) pour les roues avant (Rv) du véhicule utilitaire.

27. Structure de châssis (1) selon l'une quelconque des revendications précédentes, **caractérisée en ce que** le dispositif de réservoir (T) est garni intérieurement, au moins localement d'un matériau d'étanchéité, en particulier de matière plastique, ou un réservoir en matière plastique est installé dans le dispositif de réservoir (T), qui est destiné à contenir le fluide.

28. Structure de châssis (1) selon l'une quelconque des revendications précédentes, **caractérisée en ce que** la première construction portante (10) et la deuxième construction portante (20) sont fabriquées en matériau de tôle ou en matériau embouti et sont munies de moyens de renforcement.

29. Structure de châssis (1) selon l'une quelconque des revendications précédentes, **caractérisée en ce que** le dispositif de réservoir (T) est divisé en une première partie de réservoir (T1) et une deuxième partie de réservoir (T2), qui sont reliées l'une à l'autre par un dispositif de liaison, à partir duquel on effectue l'aspiration du fluide.

30. Véhicule utilitaire, en particulier camion, de préférence tracteur de semi-remorque, **caractérisé par** une structure de châssis (1) selon l'une quelconque des revendications précédentes.
